# EUROPÄISCHE PATENTSCHRIFT

(11) **EP 0 560 176 B1**
(45) Veröffentlichungstag und Bekanntmachung des Hinweises auf die Patenterteilung: **15.11.1995**
(21) Anmeldenummer: 93103299.9
(22) Anmeldetag: 02.03.1993
(51) Int. Cl.: B60R 22/34

(54) **Sicherheitsgurt-Rückhaltesystem für Fahrzeuge**
Safety belt restraint system for vehicles
Système de retenue à ceinture de sécurité pour véhicules

(30) Priorität: 10.03.1992 DE 4207579
(43) Veröffentlichungstag der Anmeldung: 15.09.1993
(73) Patentinhaber: TRW Occupant Restraint Systems GmbH, 73553 Alfdorf (DE)
(72) Erfinder: Schmid, Johannes, W-7070 Schwäbisch Gmünd-Hussenhofen (DE)
(74) Vertreter: Degwert, Hartmut, Dipl.-Phys.

(56) Entgegenhaltungen:
- DE-A- 3 809 007
- FR-A- 2 125 960
- US-A- 4 726 539

## Beschreibung

Die Erfindung betrifft ein Sicherheitsgurt-Rückhaltesystem für Fahrzeuge, mit einem fahrzeugsensitiv und/oder gurtbandsensitiv selbstsperrenden Gurtaufroller und einer beschleunigungsunabhängigen Blockiereinrichtung, bei der ein Untersetzungsgetriebe die Drehung eines sich mit der Gurtspule des Gurtaufrollers drehenden Zahnrades auf ein Steuerrad untersetzt, das einen oder mehrere Nockenteile aufweist, die einen gehäusefest gelagerten Kipphebel ansteuern, so daß sich der Kipphebel nach dem Abwickeln einer vorbestimmten Gurtbandlänge in einer ersten Stellung befindet, in der er eine Blockierung der Gurtspule gegen Drehung in Richtung des Gurtbandabzugs auslöst, und nach dem Wiederaufwickeln einer vorbestimmten Gurtbandlänge in einer zweiten Stellung befindet, in der er eine Aufhebung der Gurtspulenblockierung bewirkt, wobei das Steuerrad mit radialem Abstand von der Gurtspulenachse gehäusefest gelagert ist.

Ein solches System ist beispielsweise aus der US-A-4 726 539 bekannt. Im Gegensatz zur fahrzeugsensitiven bzw. gurtbandsensitiven, also beschleunigungsabhängigen Sperrung des Gurtaufrollers wirkt die beschleunigungsunabhängige Blockiereinrichtung nach ihrer Aktivierung permanent und dient zur sicheren Befestigung eines Kindersitzes oder auch zum Sichern von Lasten im Fahrzeug. Die Blockierung erfolgt durch Ausziehen des Sicherheitsgurts über die beim Anlegen des Gurts üblicherweise benötigte Ausziehlänge hinaus. Danach wird der Gurt noch durch die Aufwickelfeder des Gurtaufrollers aufgerollt, bis die Gurtlose beseitigt ist, kann aber nicht mehr ausgezogen werden. Die Blockierung wird erst dann aufgehoben, wenn der Gurt fast vollständig wieder aufgewickelt ist.

Bei einem aus der US-A-4 726 539 bekannten Sicherheitsgurt-Rückhaltesystem der im Oberbegriff des Anspruchs 1 genannten Art kämmt das sich mit der Gurtspule des Gurtaufrollers drehende Zahnrad mit dem äußeren Zahnkranz eines Untersetzungszahnrades, das mit einem im Vergleich zum äußeren Zahnrad kleineren gezahnten Ansatz versehen ist, der wiederum mit der Innenverzahnung eines das Steuerrad bildenden Ringes kämmt, der in einer im Gehäuse ausgebildeten Nut gelagert ist.

Bei einem aus der DE-PS 38 09 007 bekannten Sicherheitsgurt-Rückhaltesystem wird die Drehung der Gurtspule auf ein axial mit der Gurtspule angeordnetes Planetengetriebe übertragen, dessen Planetenrad einen Vorsprung aufweist, der in bestimmten Stellungen jeweils einen den Kipphebel ansteuernden Stößel radial verschiebt. Da die Teile eines Planetengetriebes ganz speziell aufeinander abgestimmt sind, sind diese Stellungen fest vorgegeben und ohne einschneidende Änderungen nicht variabel. Außerdem muß man beim Einbau darauf achten, daß das Planetenrad nicht nur mit der richtigen Ausrichtung des Vorsprungs, sondern auch an der richtigen Stelle des Planetengetriebes eingesetst wird, da andernfalls keine oder völlig falsche Umschaltpunkte zustandekommen. Ferner beansprucht die beschleunigungsunabhängige Blockiereinrichtung des bekannten Systems in Axialrichtung der Gurtspule Raum, so daß sie im allgemeinen nicht in vorhandene Gurtaufroller mit vorgegebenen Abmessungen integriert werden kann.

Der Erfindung liegt die Aufgabe zugrunde, ein Sicherheitsgurt-Rückhaltesystem mit einer leicht darin integrierbaren, einfach zusammenzubauenden und durch Austausch nur eines Bauteile auf verschiedene Umschaltpunkte des Systems einstellbaren beschleunigungsunabhängigen Blockiereinrichtung zu schaffen.

Diese Aufgabe wird bei einem gattungsgemäßen Sicherheitsgurt-Rückhaltesystem erfindungsgemäß dadurch gelöst, daß das Steuerrad auf einer mit radialem Abstand von der Gurtspulenachse gehäusefest angeordneten Achse gelagert ist und daß das Untersetzungsgetriebe ein Schneckenrad enthält.

Anders als bei dem bekannten Planetengetriebe ist man nicht gezwungen, die Bauteile der beschleunigungsunabhängigen Blockiereinrichtung auf der Gurtspulenachse anzuordnen, sondern es gibt zahlreiche Möglichkeiten, die Blockiereinrichtung platzsparend in vorhandene Systeme zu integrieren. Insbesondere lassen sich sämtliche Bauteile der beschleunigungsunabhängigen Blockiervorrichtung im Bereich der beschleunigungsabhängigen Blockiereinrichtung, aber noch innerhalb des maximalen Radius des Gurtwickels an einer Stelle anordnen, an der sehr häufig ohnehin freier Raum zur Verfügung steht. Die Verwendung eines Schneckenrades ermöglicht bei einer sehr geringen Anzahl von Bauteilen eine Untersetzung, die ausreicht, damit das Steuerrad bei einem Gurtbandabzug zwischen der ersten und der zweiten Stellung des Kipphebels maximal eine Umdrehung vollführt. Je zwei auf einer Achse liegende Drehteile des Untersetzungsgetriebes können einstückig ausgebildet sein. Die Umschaltpunkte der beschleunigungsunabhängigen Blockiereinrichtung sind durch Austausch eines einzigen Bauteils veränderbar, nämlich durch Austausch des Steuerrades gegen eines mit anderer Nockengestaltung. Die anderen Bauteile können in sehr vielen verschiedenen Ausführungsformen von Sicherheitsgurt-Rückhaltesystemen zum Einsatz kommen. Schließlich ist die gesamte beschleunigungsunabhängige Blockiereinrichtung sehr geräusch- und verschleißarm, und die Rückzugskraft des Gurtaufrollers wird nicht beeinträchtigt.

Bei den bevorzugten Ausführungsformen ist das Schneckenrad drehfest mit einem mit dem Zahnrad der Gurtspule in Eingriff stehenden Zahnrad auf einer gemeinsamen, gehäusefesten Achse gelagert, und das Schneckenrad steht entweder direkt oder unter Zwischenschaltung eines auf einer gehäusefesten Achse gelagerten Zahnrades mit angeflanschtem Ritzel mit einer Verzahnung des Steuerrades in Eingriff.

Wenn mehrere Achsen als vorspringende Zapfen einer gehäusefest angeordneten Trägerplatte für das Untersetzungsgetriebe ausgebildet sind, entsteht eine separat vorfertigbare und als Ganzes montierbare Baugruppe.

Wenn das Sicherheitsgurt-Rückhaltesystem so ausgebildet ist, daß bei einer fahrzeugsensitiv und/oder gurtbandsensitiv ausgelösten Relativdrehung zwischen der Gurtspule und einer auf der Gurtspulenachse gelagerten Steuerscheibe ein Steuerhebel an einer Sperrklinke angreift, um sie in Eingriff mit einer Sperrverzahnung der Gurtspule zu bringen, so ist es besonders vorteilhaft, wenn der Kipphebel nicht wie bei dem bekannten System eine Klinke direkt in die Sperrverzahnung der Gurtspule einsteuert, sondern wenn der Kipphebel einen Blockierarm aufweist, der in der ersten Stellung an der Steuerscheibe angreift, wobei er deren Drehung hemmt. Um die Steuerscheibe bezüglich einer Drehung mit der Gurtspule zurückzuhalten, ist nur ein sehr geringer Kraftaufwand erforderlich, so daß der Kipphebel sehr leicht ausgeführt werden kann und die beim Kontakt des Blockierarms mit der Steuerscheibe auftretende Reibung unter Umständen genügt. Um Sicherheitsreserven zu schaffen, kann die Steuerscheibe auch mit einer Rastverzahnung versehen sein, in welche die Spitze des Blockierarms formschlüssig eingreift.

Der Kipphebel weist vorzugsweise zwei in den Weg des oder der Nockenteile ragende Arme und eine Nase auf, an der eine Totpunktfeder angreift, die den Kipphebel in die erste bzw. in die zweite Stellung vorspannt.

Weitere Merkmale und Vorteile der Erfindung ergeben sich aus der folgenden Beschreibung zweier Ausführungsformen und aus der Zeichnung, auf die Bezug genommen wird. In der Zeichnung zeigen teils im Schnitt, teils in Draufsicht und unter Weglassung von der Übersichtlichkeit nicht dienlichen Teilen:
- Fig. 1: eine Seitenansicht einer ersten Ausführungsform des Sicherheitsgurt-Rückhaltesystems;
- Fig. 2: die Ausführungsform nach Fig. 1 entlang einer Linie II - II in Fig. 1 von links;
- Fig. 3: die Ausführungsform nach Fig. 1 entlang einer Linie III - III in Fig. 1 von oben;
- Fig. 4: eine Seitenansicht einer zweiten Ausführungsform des Sicherheitsgurt-Rückhaltesystems;
- Fig. 5: die Ausführungsform nach Fig. 4 entlang einer Linie V - V in Fig. 4 von links;
- Fig. 6: die Ausführungsform nach Fig. 4 entlang einer Linie VI - VI in Fig. 5 von oben.

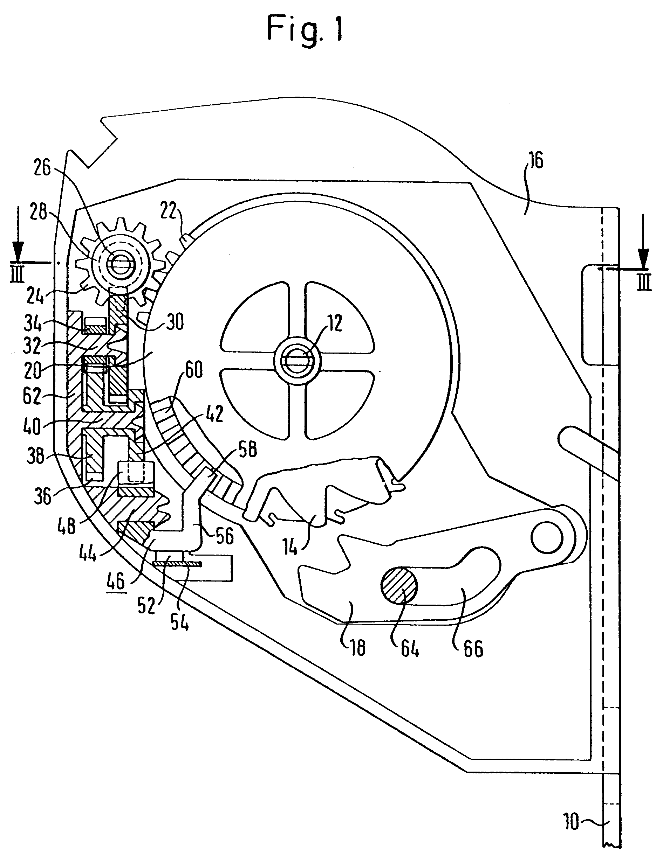

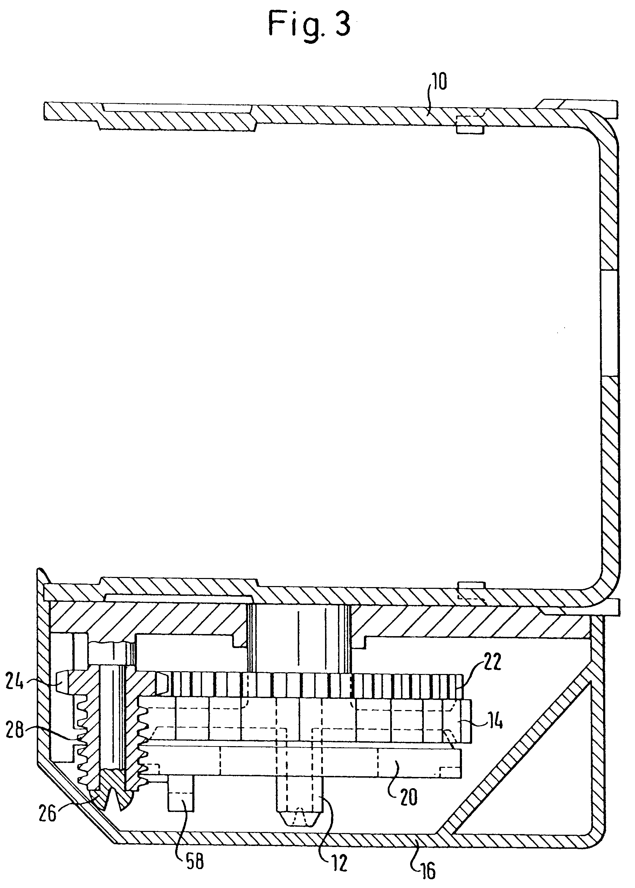

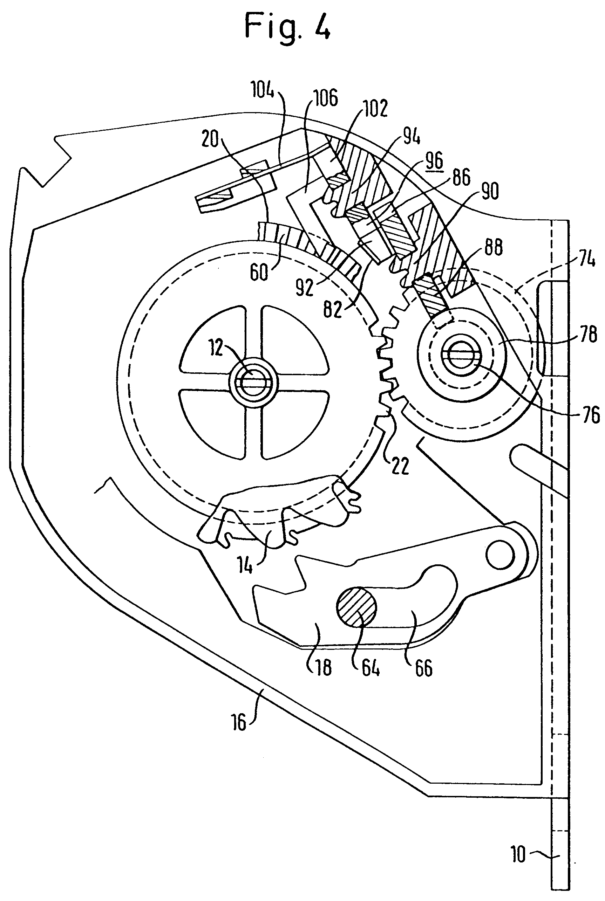

Den in den Fig. 1, 2 und 3 sowie 4, 5 und 6 gezeigten beiden Ausführungsformen ist gemeinsam, daß in einem U-förmigen Gurtaufrollergehäuse 10 eine Gurtspule für ein nicht eingezeichnetes Gurtband gelagert ist. Von der Gurtspule ist in den Fig. 1 und 4 nur ein Ende der Gurtspulenachse 12 und ein Winkelausschnitt ihrer Sperrverzahnung 14 eingezeichnet. In den übrigen Figuren fehlt die Gurtspule ganz. In Verlängerung der Gurtspulenachse 12 ist an einem Schenkel des Gehäuses 10 ein Steuergehäuse 16 angebracht, in dem allgemein bekannte Elemente zur fahrzeugsensitiven und gurtbandsensitiven Sperrung der Gurtspule untergebracht sind. Von diesen Elementen sind eine am Gehäuse 10 gelagerte Sperrklinke 18 und eine Steuerscheibe 20 eingezeichnet. Die Steuerscheibe 20 ist auf der Gurtspulenachse 12 gelagert und kann durch Eigenträgheit oder durch Ansprechen eines nicht eingezeichneten fahrzeugsensitiven Beschleunigungssensors gegenüber einer Drehung der Gurtspule zurückbleiben, wobei die Sperrklinke 18 in bekannter Weise in die Sperrverzahnung 14 der Gurtspule eintaucht. Auf der Gurtspulenachse 12 ist zwischen der Gurtspule und der Steuerscheibe 20 ein Zahnrad 22 angeordnet, das drehfest mit der Gurtspule verbunden ist und etwa den Radius der Steuerscheibe 20 hat. Das Zahnrad 22 kann auch durch äußere Verzahnung eines geeigneten, ohnehin an dieser Stelle vorhandenen Drehteils gebildet sein.

Bei der Ausführungsform nach den Fig. 1 bis 3 greift in das Zahnrad 22 ein axial dazu versetztes kleineres Zahnrad 24 ein, das auf einer zur Gurtspulenachse 12 parallelversetzten Achse 26 gelagert ist. Das Zahnrad 24 ist einstückig mit einem koaxial dazu ausgerichteten Schneckenrad 28 verbunden. Mit dem Schneckenrad 28 kämmt ein Zahnrad 30, das auf einer quer zur Achse 26 verlaufenden Achse 32 gelagert ist. Am Zahnrad 30 ist koaxial und einstückig ein Ritzel 34 angefügt, das in eine äußere Verzahnung 36 eines Steuerrades 38 eingreift. Das Steuerrad 38 ist auf einer Achse 40 gelagert, die parallel zu der Achse 32 verläuft. Das Steuerrad 38 setzt sich zum Gehäuseinneren hin einstückig fort und erweitert sich schließlich radial zu einem kreissektorförmigen Nockenteil 42.

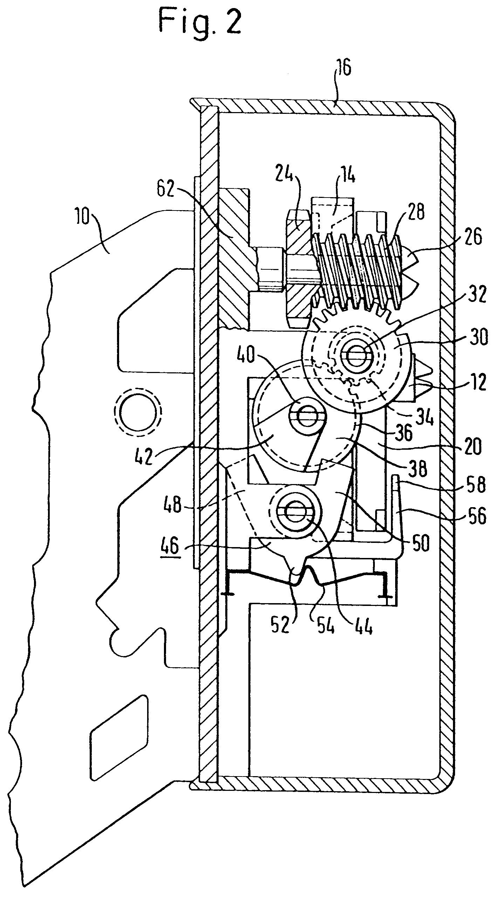

Auf einer parallel zu den Achsen 32 und 40 verlaufenden Achse 44 ist ein Kipphebel 46 gelagert. Der Kipphebel 46 weist zwei in den äußeren Radius des Nockenteils 42 ragende Arme 48, 50 und eine in entgegengesetzter Richtung weisende Nase 52 auf. An der Nase 52 greift eine Totpunktfeder 54 an, die den Kipphebel 46 entweder in eine erste Stellung beaufschlagt, in der er eine Blockierung der Gurtspule gegen Drehung in Richtung des Gurtbandabzugs auslöst, oder in eine um einige Grade im Uhrzeigersinn dazu gedrehte und in Fig. 2 gezeigte zweite Stellung, in der er eine Aufhebung der Gurtspulenblockierung bewirkt, wobei zwischen den beiden Stellungen infolge der Federwirkung und eines Knicks in der Totpunktfeder 54 eine instabile Totpunktlage existiert. Der Kipphebel 46 trägt ferner einen Blockierarm 56, dessen Spitze 58 sich in der zweiten Stellung im Abstand zu der Steuerscheibe 20 befindet und die in der Blockierstellung in eine nur in einem Winkelausschnitt gezeichnete Rastverzahnung 60 an der Steuerscheibe 20 eingreift.

Die Achsen 26, 32, 40 und 44 sind einstückig als einseitig angeformte, vorspringende Zapfen einer gemeinsamen, gehäusefest angeordneten Trägerplatte 62 ausgebildet. Die Achsen 26, 32, 40 und 44 sind geschlitzt und ihre Enden erweitert, so daß die drehbaren Bauteile einfach aufgeclipst werden können. Auch die Totpunktfeder 54 ist an der Trägerplatte 62 gehaltert. Daher bilden das Untersetzungsgetriebe, der Kipphebel und die Totpunktfeder der Ausführungsform nach den Figuren 1 bis 3 eine Baugruppe, die einzeln vorgefertigt sein kann und mit entsprechenden Montagevorteilen als Ganzes am Gehäuse 10 zu befestigen ist.

Die beschriebene Blockiereinrichtung arbeitet wie folgt: Die Drehung des Zahnrades 22 wird über das Zahnrad 24, das Schnekkenrad 28, das Zahnrad 30, das Ritzel 34 und das Steuerrad 38 so weit untersetzt, daß das Steuerrad 38 bei weitgehendem Abzug des Gurtbandes weniger als eine Umdrehung vollführt. In den jeweiligen Endstellungen wird der Kipphebel 46 von dem passend gestalteten Nockenteil 42 umgelegt. In der ersten Stellung verhindert die an der Steuerscheibe 20 angreifende Spitze 58 des Blockierarmes 56 deren Rotation, so daß die bei einem geringfügigen Gurtabzug auftretende Relativdrehung zwischen der Gurtspule bzw. dem Zahnrad 22 in bekannter Weise einen auf der Gurtspulenachse 12 gelagerten Steuerhebel 64 verschwenkt. Von dem Steuerhebel 64 ist in den Fig. 1 und 4 nur derjenige Teil sichtbar, der in eine Ausnehmung 66 in der Sperrklinke 18 eingreift und die Sperrklinke 18 mit der Sperrverzahnug 14 der Gurtspule in Eingriff bringt, so daß weiterer Gurtabzug nicht möglich ist.

Die Ausführungsform nach den Fig. 4 bis 6 unterscheidet sich von der vorstehend beschriebenen Ausführungsform im wesentlichen dadurch, daß die Blockiereinrichtung an anderer Stelle im Steuergehäuse 16 untergebracht ist, so daß die Flexibilität der beschleunigungsunabhängigen Blockiereinrichtung in Bezug auf den Einbau in unterschiedliche Sicherheitsgurt-Rückhaltesysteme deutlich wird, und dadurch, daß ein der Zahnrad-Ritzel-Kombination 30, 34 entsprechendes Element fehlt. Mit der zuvor beschriebenen Ausführungsform übereinstimmende Elemente sind mit gleichen Bezugszahlen und die übrigen, in ihrer Funktion vergleichbaren Elemente mit um 50 erhöhten Bezugszahlen versehen.

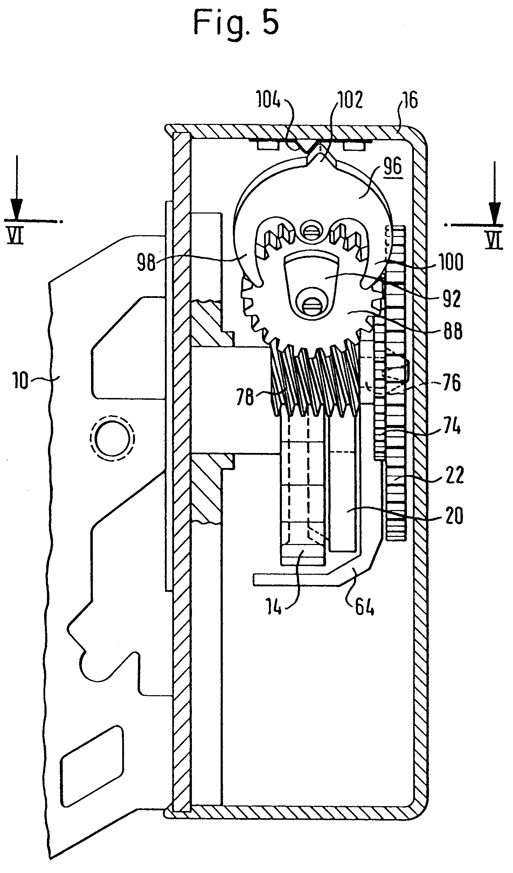

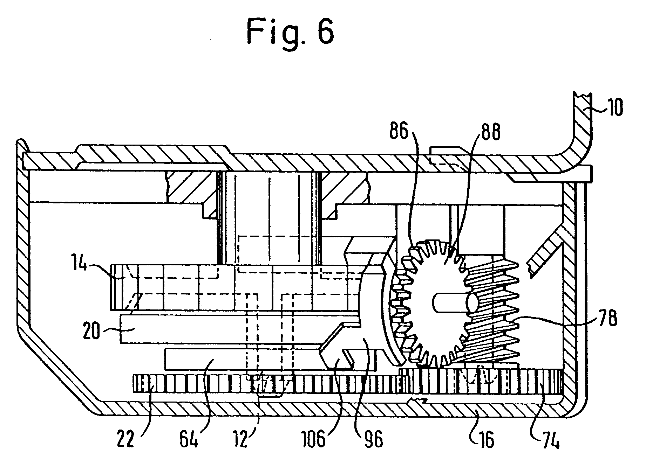

In das Zahnrad 22 greift ein axial dazu versetztes kleineres Zahnrad 74 ein, das auf einer zur Gurtspulenachse 12 parallelversetzten Achse 76 gelagert ist. Das Zahnrad 74 ist einstückig mit einem koaxial dazu verlaufenden Schneckenrad 78 verbunden. Mit dem Schneckenrad 78 kämmt ein mit einer äußeren Verzahnung 86 versehenes Steuerzahnrad 88, das auf einer bezüglich des Steuergehäuses festen Achse 90 gelagert ist und einen kreissektorförmigen Nockenteil 92 aufweist. Auf einer zu der Achse 90 parallelen Achse 94 ist ein Kipphebel 96 gelagert, der in den Fig. 5 und 6 jeweils nur teilweise eingezeichnet ist. Der Kipphebel 96 weist zwei in den äußeren Radius des Nockenteils 92 ragende Arme 98, 100 und eine in entgegengesetzter Richtung weisende Nase 102 auf. An der Nase 102 greift wie bei der vorstehend beschriebenen Ausführungsform eine Totpunktfeder 104 an. Der Kipphebel 96 trägt ferner einen Blockierarm 106, dessen Spitze in die Rastverzahnung 60 an der Steuerscheibe 20 eingreifen kann. Obwohl aus der Zeichnung nicht unmittelbar ersichtlich, sind auch bei dieser Ausführungsform mehrere Getriebeelemente auf einer gemeinsamen Trägerplatte angeordnet.

## Patentansprüche

1. Sicherheitsgurt-Rückhaltesystem für Fahrzeuge, mit einem fahrzeugsensitiv und/oder gurtbandsensitiv selbstsperrenden Gurtaufroller und einer beschleunigungsunabhängigen Blockiereinrichtung, bei der ein Untersetzungsgetriebe (24, 28, 30, 34, 38; 74, 78, 88) die Drehung eines sich mit der Gurtspule des Gurtaufrollers drehenden Zahnrades (22) auf ein Steuerrad (38; 88) untersetzt, das einen oder mehrere Nockenteile (42; 92) aufweist, die einen gehäusefest gelagerten Kipphebel (46; 96) ansteuern, so daß sich der Kipphebel nach dem Abwickeln einer vorbestimmten Gurtbandlänge in einer ersten Stellung befindet, in der er eine Blockierung der Gurtspule gegen Drehung in Richtung des Gurtbandabzugs auslöst, und nach dem Wiederaufwickeln einer vorbestimmten Gurtbandlänge in einer zweiten Stellung befindet, in der er eine Aufhebung der Gurtspulenblockierung bewirkt, wobei das Steuerrad (38, 88) mit radialem Abstand von der Gurtspulenachse gehäusefest gelagert ist, dadurch gekennzeichnet, daß das Steuerrad (38, 88) auf einer gehäusefest angeordneten Achse (40, 90) gelagert ist und daß das Untersetzungsgetriebe (24, 28, 30, 34, 38; 74, 78, 88) ein Schneckenrad (28; 78) enthält.

2. Sicherheitsgurt-Rückhaltesystem nach Anspruch 1, dadurch gekennzeichnet, daß das Schneckenrad (28; 78) drehfest mit einem mit dem Zahnrad (22) der Gurtspule in Eingriff stehenden Zahnrad (24; 74) auf einer gemeinsamen, gehäusefesten Achse (26; 76) gelagert ist und daS das Schneckenrad (28; 78) direkt oder unter Zwischenschaltung eines auf einer gehäusefesten Achse (32) gelagerten Zahnrades (30) mit angeflanschtem Ritzel (34) mit einer Verzahnung (36; 86) des Steuerrades (38; 88) in Eingriff steht.

3. Sicherheitsgurt-Rückhaltesystem nach einem der vorstehenden Ansprüche, dadurch gekennzeichnet, daß mehrere Lagerachsen (26, 32, 40, 44; 76, 90, 94) von drehbaren Funktionsteilen des Untersetzungsgetriebes als vorspringende Zapfen einer gehäusefest angeordneten Trägerplatte (62) für das Untersetzungsgetriebe (24, 28, 30, 34, 38; 74, 78, 88) ausgebildet sind.

4. Sicherheitsgurt-Rückhaltesystem nach einem der vorstehenden Ansprüche, dadurch gekennzeichnet, daß bei einer Relativdrehung zwischen der Gurtspule und einer auf der Gurtspulenachse gelagerten Steuerscheibe (20) ein Steuerhebel (64) an einer Sperrklinke (18) angreift, um sie in Eingriff mit einer Sperrverzahnung (14) der Gurtspule zu bringen, und daß der Kipphebel (46; 96) einen Blockierarm (56, 106) aufweist, der in der ersten Stellung des Kipphebels an der Steuerscheibe (20) angreift und deren Drehung hemmt.

5. Sicherheitsgurt-Rückhaltesystem nach einem der vorstehenden Ansprüche, dadurch gekennzeichnet, daS der Kipphebel (46; 96) zwei in den weg des oder der Nockenteile (42; 92) ragende Arme (48, 50; 98, 100) und eine Nase (52; 102) aufweist, an der eine Totpunktfeder (54; 104) angreift, die den Kipphebel (46; 96) in die erste bzw. in die zweite Stellung vorspannt.

## Claims

1. Safety belt restraining system for vehicles, comprising a belt retractor self-locking in vehicle-sensitive and/or webbing-sensitive manner and an acceleration-independent blocking means in which a reduction gearing (24, 28, 30, 34, 38; 74, 78, 88) transmits the rotation of a gear (22) rotating with the belt reel of the belt retractor with reduction to a control wheel (38; 88) which has one or more cam members (42; 92) which drive a rocking lever (46; 96) mounted fixed with respect to the housing, so that after the uncoiling of a predetermined webbing length the rocking lever is in a first position in which it initiates a blocking of the belt reel against rotation in the direction of belt withdrawal, and after the recoiling of a predetermined webbing length is disposed in a second position in which it effects a cancellation of the belt reel blocking, said control wheel (38; 88) being mounted fixed with respect to the housing at a radial distance from the belt reel shaft, characterized in that the control wheel (38, 88) is mounted on a shaft (40, 90) disposed fixed with respect to the housing and that the reduction gearing (24, 28, 30, 34, 38; 74, 78, 88) includes a worm wheel (28; 78).

2. Safety belt restraining system according to claim 1, characterized in that the worm wheel (28; 78) is mounted non-rotatably with a gear (24; 74) meshing with the gear (22) of the belt reel on a common housing-fixed shaft (26; 76) and that the worm wheel (28; 78) is in engagement directly or with interpositon of a gear (30) mounted on a housing-fixed shaft (32) with flanged pinion (34) with a toothing (36; 86) of the control wheel (38; 88).

3. Safety belt restraining system according to any one of the preceding claims, characterized in that a plurality of bearing shafts (26, 32, 40, 44; 76, 90, 94) of rotatable functional components of the reduction gearing are formed as projecting pins of a housing-fixed carrier plate (62) for the reduction gearing (24, 28, 30, 34, 38; 74, 78, 88).

4. Safety belt restraining system according to any one of the preceding claims, characterized in that on a relative rotation between the belt reel and a control disc (20) mounted on the belt reel shaft a control lever (64) engages a blocking pawl (18) to bring the latter into engagement with a blocking toothing (14) of the belt reel, and that the rocking lever (46; 96) comprises a blocking arm (56, 106) which in the first position of the rocking lever engages the control disc (20) and inhibits rotation thereof.

5. Safety belt restraining system according to any one of the preceding claims, characterized in that the rocking lever (46; 96) comprises two arms (48, 50; 98, 100) projecting into the path of the cam member or members (42; 92) and a nose (52; 102) on which an over-deadcenter spring (54; 104) engages which biases the rocking lever (46; 96) into the first or second position.

## Revendications

1. Système de retenue de ceinture de sécurité pour véhicules, comprenant un enrouleur de ceinture à auto-blocage, qui est sensible au véhicule et/ou à la sangle de la ceinture, ainsi qu'un dispositif de blocage indépendant des accélérations et dans lequel un train d'engrenages (24, 28, 30, 34, 38 ; 74, 78, 88) produit une démultiplication de la rotation d'un pignon (22) tournant avec la bobine de l'enrouleur de la ceinture sur une roue de commande (38 ; 88) qui comporte un ou plusieurs éléments de came (42 ; 92) qui attaquent un levier basculant (46 ; 96) monté en position fixe sur le boîtier de manière qu'après déroulement d'une longueur prédéterminée de la sangle de la ceinture, le levier basculant se trouve à une première position à laquelle il déclenche un blocage de la bobine de la ceinture en l'empêchant de tourner dans le sens du dévidage de la sangle de la ceinture et qu'après le réenroulement d'une longueur prédéterminée de la sangle de la ceinture, il se trouve à une seconde position à laquelle il provoque une suppression du blocage de la bobine de la ceinture, la roue de commande (38, 88) étant montée à distance radiale de l'axe de la bobine de la ceinture en étant en position fixe par rapport au boîtier, caractérisé en ce que la roue de commande (38, 88) est montée sur un axe (40, 90) qui est solidarisé avec le boîtier et en ce que le train d'engrenages démultiplicateur (24, 28, 30, 34, 38 ; 74, 78, 88) comprend une roue à denture hélicoïdale (28 ; 78).

2. Système de retenue de ceinture de sécurité selon la revendication 1, caractérisé en ce que la roue à denture hélicoïdale (28 ; 78) est solidaire en rotation d'un pignon (24 ; 74) engrenant avec un pignon (22) de la bobine de la ceinture et elle est montée sur un axe (26 ; 76) qui est fixé au boîtier et qui est commun avec celui dudit pignon (24 ; 74) et en ce que la roue à denture hélicoïdale (28 ; 78) engrène directement avec une denture (36 ; 86) de la roue de commande (38 ; 88) ou par l'intermédiaire d'une roue dentée (30) à laquelle un pignon (34) est bridé et qui est montée sur un axe (32) qui est solidaire du boîtier.

3. Système de retenue de ceinture de sécurité selon l'une des revendications précédentes, caractérisé en ce que plusieurs axes (26, 32, 40, 44 ; 76, 90, 94) de montage de pièces rotatives fonctionnelles du train d'engrenages démultiplicateur sont constitués de broches en saillie faisant partie d'une plaque (62) de support du train d'engrenages démultiplicateur (24, 28, 30, 34, 38 ; 74, 78, 88) montée en position fixe sur le boîtier.

4. Système de retenue de ceinture de sécurité selon l'une des revendications précédentes, caractérisé en ce que, lors d'une rotation relative entre la bobine de la ceinture et un disque de commande (20) monté sur l'axe de la bobine de la ceinture, un levier de commande (64) agit sur un cliquet d'arrêt (18) pour le mettre en prise avec une denture de blocage (14) de la bobine de la ceinture et en ce que le levier basculant (46 ; 96) comporte un bras de blocage (56, 106) qui agit sur le disque de commande (20) et en freine la rotation lorsque le levier basculant est à la première position.

5. Système de retenue de ceinture de sécurité selon l'une des revendications précédentes, caractérisé en ce que le levier basculant (46 ; 96) comprend deux bras (48, 50 ; 98, 100) qui pénètrent dans la voie de l'élément ou des éléments de came (42 ; 92), ainsi qu'un talon (52 ; 102) sur lequel agit un ressort à point mort (54 ; 104) qui met sous précontrainte le levier basculant (46 ; 96) à la première ou à la seconde position.
